# EUROPEAN PATENT APPLICATION

(11) **EP 4 572 459 A1**
(43) Date of publication of application: **18.06.2025**
(21) Application number: 22954750.0
(22) Date of filing: 29.09.2022
(51) Int. Cl.: H04W 72/04

(54) **BEAM DETERMINATION METHOD AND DEVICE FOR BACKHAUL LINK, MEDIUM AND PRODUCT**

(30) Priority: 09.08.2022 WO PCT/CN2022/111081
(71) Applicant: Beijing Xiaomi Mobile Software Co., Ltd., Beijing 100085 (CN)
(72) Inventor: LIU, Min, Beijing 100085 (CN)
(74) Representative: Dehns Germany Partnerschaft mbB
(86) International application number: PCT/CN2022/122910
(87) International publication number: WO 2024/031806

(57) **Abstract**

The present disclosure relates to the field of communications. Disclosed are a beam determination method and device for a backhaul link, a medium and a product. The method is executed by a network controlled repeater, and comprises: determining that a beam for a backhaul link is the same as a beam of a first channel on a control link. The method enables accurate determination of a beam for a backhaul link when a plurality of candidate beams are present on a control link.

## Description

The present application claims priority to a patent application filed on August 9, 2022, with an application number of PCT/CN2022/111081, and a title of "Beam Determination Method and Apparatus for Backhaul Link, Medium and Product", the disclosure of which is incorporated herein by reference in its entirety.

### TECHNICAL FIELD

The present disclosure relates to the field of communications, and in particular to a beam determination method and apparatus for a backhaul link, medium, and product.

### BACKGROUND

The Network Controlled Repeater (NCR) can improve system coverage in a low-cost way. The NCR consists of two parts: the Mobile Termination (MT) part and the Forwarding (FWD) part. The MT part can be used to receive control commands on the control link sent by the access network device. The control commands are used to control the behavior of the FWD part, that is, the behavior on the backhaul link and the access link, such as beam indication direction, forwarding on and off, etc.

Since the backhaul link and the control link are both links between the base station and the NCR, it is generally assumed that the backhaul link and the control link have similar channel characteristics and use the same spatial domain coding, that is, beams. When the backhaul link and the control link are transmitting/receiving at the same time, the backhaul link and the control link may use the same beam. When only the backhaul link is transmitting/receiving between the base station and the NCR, since the base station can indicate the beam for the control link with respect to each channel/signal separately or with respect to multiple channels/signals, multiple beams may be configured for the control link of the NCR in either case. In this scenario, how to determine the beam on the backhaul link is an urgent problem to be solved.

### SUMMARY

An embodiment of the present disclosure provides a beam determination method and apparatus for a backhaul link, medium, and product. The technical solution is as follows.

According to an aspect of the embodiments of the present disclosure, a beam determination method for a backhaul link is provided, the method including: determining that the beam for the backhaul link is the same as the beam for the first channel on the control link.

According to another aspect of the embodiments of the present disclosure, a beam determination apparatus for a backhaul link is provided, the apparatus including:
a determination module, configured to determine that the beam for the backhaul link is the same as the beam for the first channel on the control link.

According to another aspect of the embodiments of the present disclosure, a chip is provided. The chip includes a programmable logic circuit and/or a program instruction. When the chip is running, the beam determination method for the backhaul link as described in the above aspect(s) is implemented.

According to another aspect of the embodiments of the present disclosure, a network controlled repeater is provided, the network controlled repeater including:
a processor; and
a transceiver connected to the processor.

The processor is configured to load and execute executable instructions to implement the beam determination method for the backhaul link as described in the above aspect(s).

According to another aspect of the embodiments of the present disclosure, a terminal is provided, the terminal including:
a processor; and
a transceiver connected to the processor.

The processor is configured to load and execute executable instructions to implement the beam determination method for the backhaul link in various aspects as described above.

According to another aspect of the embodiments of the present disclosure, a computer-readable storage medium is provided. The computer-readable storage medium stores at least one instruction, at least one program, a code set, or an instruction set. The at least one instruction, the at least one program, the code set, or the instruction set is loaded and executed by the processor to implement the beam determination method for the backhaul link in various aspects as described above.

According to another aspect of the embodiments of the present disclosure, a computer program product (or computer program) is provided. The computer program product (or computer program) includes computer instructions. The computer instructions are stored in a computer-readable storage medium. The processor of the computer device reads the computer instructions from the computer-readable storage medium, and the processor executes the computer instructions, so that the computer device performs the beam determination method for the backhaul link in various aspects as described above.

The technical solution provided by the embodiments of the present disclosure may include the following beneficial effects.

When there are multiple candidate beams on the control link, it is possible to determine that the beam on the backhaul link is the same as the beam for the first channel on the control link, thereby accurately determining the transmitting beam and/or receiving beam used on the backhaul link.

### BRIEF DESCRIPTION OF THE DRAWINGS

In order to more clearly illustrate the technical solutions in the embodiments of the present disclosure, the following will briefly introduce the drawings required for the description of the embodiments. It shall be noted that the drawings in the following description are only some embodiments of the present disclosure. For those of ordinary skills in the art, other drawings can also be obtained based on these drawings without creative work.
Fig. 1 is a schematic diagram of a communication system provided according to an example embodiment;
Fig. 2 is a flowchart of a beam determination method for a backhaul link provided according to an example embodiment;
Fig. 3 is a schematic diagram of a beam determination method for a backhaul link provided according to an example embodiment;
Fig. 4 is a flowchart of a beam determination method for a backhaul link provided according to an example embodiment;
Fig. 5 is a schematic diagram of a beam determination method for a backhaul link provided according to an example embodiment;
Fig. 6 is a flowchart of a beam determination method for a backhaul link provided according to an example embodiment;
Fig. 7 is a schematic diagram of a beam determination method for a backhaul link provided according to an example embodiment;
Fig. 8 is a flowchart of a beam determination method for a backhaul link provided according to an example embodiment;
Fig. 9 is a schematic diagram of a beam determination method for a backhaul link provided according to an example embodiment;
Fig. 10 is a flowchart of a beam determination method for a backhaul link provided according to an example embodiment;
Fig. 11 is a schematic diagram of a beam determination method for a backhaul link provided according to an example embodiment;
Fig. 12 is a flowchart of a beam determination method for a backhaul link provided according to an example embodiment;
Fig. 13 is a schematic diagram of a beam determination method for a backhaul link provided according to an example embodiment;
Fig. 14 is a flowchart of a beam determination method for a backhaul link provided according to an example embodiment;
Fig. 15 is a schematic diagram of a beam determination method for a backhaul link provided according to an example embodiment;
Fig. 16 is a block diagram of a beam determination apparatus for a backhaul link provided according to an example embodiment;
Fig. 17 is a schematic structural diagram of a network controlled repeater or terminal provided according to an example embodiment; and
Fig. 18 is a schematic structural diagram of an access network device provided according to an example embodiment.

### DETAILED DESCRIPTION OF THE EMBODIMENTS

Here, example embodiments will be described in detail, and examples thereof are shown in the accompanying drawings. When the following description refers to the drawings, unless otherwise indicated, the same numbers in different drawings represent the same or similar elements. The implementations described in the following example embodiments do not represent all the embodiments consistent with the present application. Instead, they are only examples of apparatus and methods consistent with some aspects of the present application as detailed in the attached claims. In the description of the present disclosure, unless otherwise specified, "/" means or. For example, A/B may mean A or B. In the present application, "and/or" is only a description about the association relationship among associated objects, indicating that there may be three relationships. For example, A and/or B may mean that A exists alone, A and B exist at the same time, and B exists alone.

The terms used in the present application are only for the purpose of describing specific embodiments, and are not intended to limit the present application. The singular forms of "a", "an", and "the" used in the present application and the attached claims are also intended to include plural forms, unless the context clearly indicates other meanings. It should also be understood that the term "and/or" used in the present application refers to and includes any or all possible combinations of one or more associated items as listed.

It should be understood that although the terms first, second, third, etc. may be used in the present application to describe various information, these information should not be limited to these terms. These terms are only used to distinguish the same type of information from each other. For example, without departing from the scope of the present application, the first information may also be referred to as the second information, and similarly, the second information may also be referred to as the first information. Depending on the context, for example, the word "if" used herein may be interpreted as "at" or "when" or "in response to determining".

In order to explain the relevant technology of the present disclosure, it is necessary to first understand the concept of beams. Beams were introduced in 3GPP Rel.15, but they were not directly reflected in the standard. Instead, they appeared in the form of a Transmission Configuration Indicator state (TCI state). TCI state is used to indicate a Quasi-Co-Location (QCL) source reference signal and the channel parameter QCL type configuration (QCL Type) that can be obtained therefrom. Different QCL types contain different channel characteristics, and two reference signals with a QCL relationship have the same channel characteristics (channel characteristics contained in the QCL type).

QCL Type A: Doppler Shift, Doppler Spread, Average Delay, Delay Spread.

QCL Type B: Doppler Shift, Doppler Spread.

QCL Type C: Average Delay, Doppler Shift.

QCL Type D: Spatial Rx parameter.

QCL Type D indicates beam information, *i.e.,* spatial Rx parameters. Assuming beam correspondence, the spatial transmitting parameters and the spatial receiving parameters of the user equipment are the same.

In Rel.15 and Rel.16, the beams for the downlink control channel, the downlink data channel, the uplink control channel, and the uplink data channel are indicated separately. Considering that in many cases, the beams for these channels are the same, separate beam indications cause a lot of signaling redundancy. Therefore, the concept of unified TCI state is introduced in Rel.17. This unified TCI state can be effective for both control and data channels. When the joint TCI state is used, the unified TCI is effective for both uplink and downlink. However, there are some special cases where the downlink receiving beam cannot be considered as equivalent to the uplink transmitting beam, such as when considering the Maximum Permissible Exposure (MPE) or network flexibility. At this time, the concept of separate TCI state is introduced, and the downlink transmiting beam and the uplink transmiting beam are indicated to the user separately by separate beam indication. At this time, the TCI state in the unified TCI is effective for either uplink or downlink.

For the joint/separate beam indication in Rel.17, one or more TCI states need to be activated through the Media Access Control (MAC) control element (CE). Then, the user-specific Downlink Control Information (DCI) is used to indicate one of the activated TCI states for the user. If MAC-CE only activates one TCI state, the activated TCI state is directly used to determine the transmitting beam. At the same time, a Hybrid Automatic Repeat-reQuest acknowledgment (HARQ-ack) feedback mechanism is designed for the DCI signaling indicating the beam. In Rel.17, only DCI formats 1_1/1_2 with and without scheduling information are supported for beam indication. It is required that when indicating the beam, the Cyclic Redundancy Check (CRC) of DCI format 1_1/1_2 without scheduling information also needs to be scrambled with the Configured Scheduling Radio Network Temporary Identity (CS-RNTI). The reference point for the beam application time is the last symbol of the uplink resource for which the user equipment feedbacks the HARQ-ACK information.

From the background technology, it can be known that there are two modes to semi-statically configure the control link.

Mode 1, the beam is indicated for each channel/signal separately, that is, not supporting the unified TCI, such as R15/16 users. At this time, separate signaling is required for example for the beams used by Physical Uplink Control Channel (PUCCH), Physical Uplink Shared Channel (PUSCH), Physical Downlink Control Channel (PDCCH), and Physical Downlink Shared Channel (PDSCH).

Mode 2, when the beam is indicated for multiple channels/signals, that is, supporting the unified TCI, such as R17 users, multiple channels can be indicated with the same beam, and downlink reception and uplink transmission, such as PUCCH, PUSCH, PDCCH, and PDSCH, all use one beam in a unified way.

Then, regardless of mode 1 or mode 2, multiple TCIs may be configured for the MT control link when the Radio Resource Control (RRC) is configured. The present disclosure solves the problem of which beam on the control link the NCR backhaul link should be the same as.

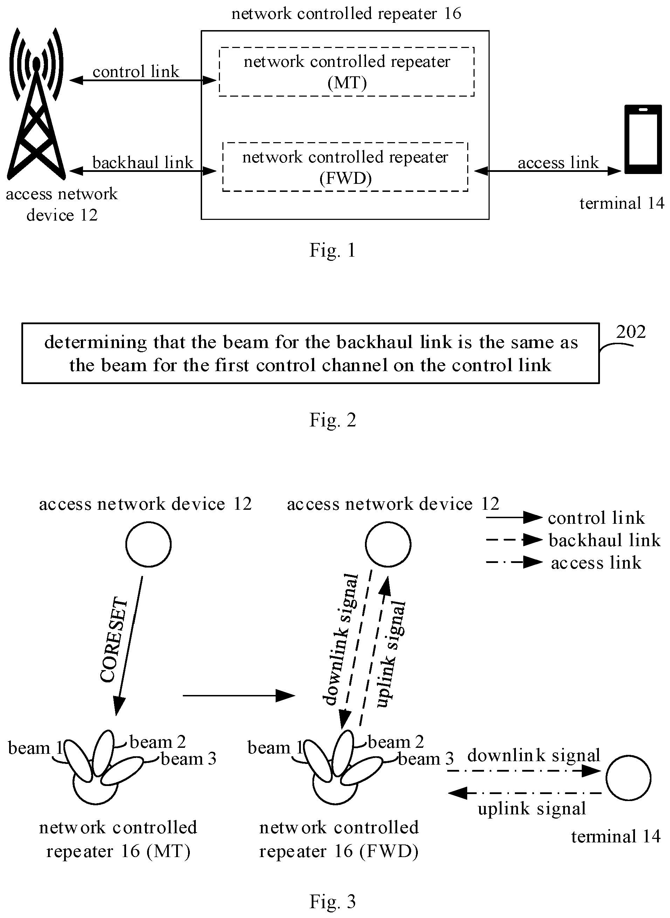

Fig. 1 shows a schematic diagram of a communication system provided by an example embodiment of the present disclosure. The communication system may include an access network device 12, a terminal 14, and a network controlled repeater 16.

The access network device 12 may be a base station, which is a device that provides wireless communication functions for the terminal 14. The base station may include various forms of macro base stations, micro base stations, relay stations, access points, etc. In systems using different wireless access technologies, the names of devices with base station functions may be different. For example, in the Long Term Evolution (LTE) system, it is called an evolved base station (eNodeB, eNB); and in the 5G New Radio (NR) system, it is called a next-generation base station (gNodeB, gNB). With the evolution of communication technology, the description of "base station" may change. For the convenience of description in the embodiments of the present disclosure, the above-mentioned devices that provide wireless communication functions for the terminal 14 are collectively referred to as access network devices 12.

The terminal 14 may include various handheld devices with wireless communication functions, vehicle-mounted devices, wearable devices, computing devices, or other processing devices connected to a wireless modem, as well as various forms of user equipment, Mobile Stations (MS), terminal devices, etc. For the convenience of description, the above-mentioned devices are collectively referred to as terminals.

The network controlled repeater 16 can improve system coverage in a low-cost way. The network controlled repeater consists of two parts, namely the MT part and the FWD part. The access network device sends a control command to the network controlled repeater through a control link, and the MT part receives it. After the MT part receives the control command, the network controlled repeater uses the control command to control the behavior of the FWD part, that is, the behavior on the backhaul link and the access link, such as the beam indication direction, the forwarding on and off, etc.

The control link is the link between the access network device and the MT part.

The backhaul link is the link between the access network device and the FWD part.

The access link is the link between the FWD part and the terminal, and the forwarding mentioned in the present disclosure refers to the forwarding related to the backhaul link. For example, the terminal sends an uplink signal to the FWD part through the access link, and the FWD part forwards the uplink signal to the access network device through the backhaul link. The access network device sends a downlink signal to the FWD part through the backhaul link, and the FWD part forwards the downlink signal to the terminal through the access link.

Fig. 2 shows a flowchart of a beam determination method for a backhaul link provided by an example embodiment of the present disclosure. The method is performed by a network controlled repeater, and the method includes step 202.

In step 202: it is determined that the beam for the backhaul link is the same as the beam for the first channel on the control link.

In some embodiments, the first channel includes at least one of the following:
- PDCCH, where the PDCCH includes the most recent PDCCH;
- PDSCH, where the PDSCH includes the most recent PDSCH;
- PUCCH, where the PUCCH includes the most recent PUCCH;
- PUSCH, where the PUSCH includes the most recent PUSCH.

In some embodiments, the beam for the PDCCH is determined by the Control Resource Set (CORESET) carrying the PDCCH. The CORESET is a more flexible time-frequency region for searching the PDCCH, which is designed for the purpose of limiting the PDCCH transmission of a terminal to a control subband, rather than transmitting it within the entire system bandwidth. It can be understood that when the beam for the PDCCH is mentioned in the present application, it can be regarded as the beam for the CORESET. Thus, this method can also be understood as determining that the beam for the backhaul link is the same as the beam for the first CORESET on the control link. The first CORESET carrying the PDCCH includes at least one of the following:
- CORESET with an index of 0, that is, CORESET#0;
- CORESET carrying Side Control Information (SCI).

The CORESET carrying SCI includes the CORESET carrying the most recent SCI.

SCI is information sent by the access network device to the NCR for controlling the behavior of the NCR, such as beamforming information, switch information, power control information, etc. Based on this information, the NCR may perform forwarding-related behaviors, such as adjusting the beam used for forwarding and turning on or off forwarding at a specific time.

In some embodiments, PDSCH refers to the network controlled repeater/repeater/Mobile Terminal-dedicated Physical Downlink Shared Channel (NCR/repeater/MT-dedicated PDSCH); PUCCH refers to the network controlled repeater/repeater/Mobile Terminal-dedicated Physical Uplink Control Channel (NCR/repeater/MT-dedicated PUCCH). In addition, MT-dedicated may also be expressed as UE-dedicated, because MT itself has some UE functions. However, the UE does not refer to the terminal device, but to the MT.

As shown in Fig. 3, in the control link, the access network device 12 sends the beam configuration information and/or indication information of the PDCCH (CORESET) to the network controlled repeater 16. Assume that the network controlled repeater 16 is configured/indicated such that beam #2 corresponding to TCI-ID#2 is used as the receiving beam to receive the PDCCH. That is, the PDCCH on the control link corresponds to beam 2.

The network controlled repeater 16 uses beam 2 in the backhaul link to receive the downlink signal from the access network device 12, and then forwards the downlink signal to the terminal 14 through the access link; and/or, the network controlled repeater 16 uses beam 2 in the backhaul link to forward the uplink signal to the access network device 12.

In summary, the method provided by an embodiment of the present disclosure can determine that the beam on the backhaul link is the same as the beam for the first channel on the control link when there are multiple candidate beams on the control link, thereby accurately determining the transmitting beam and/or the receiving beam used on the backhaul link.

### Regarding an embodiment in which the first channel includes a first downlink channel

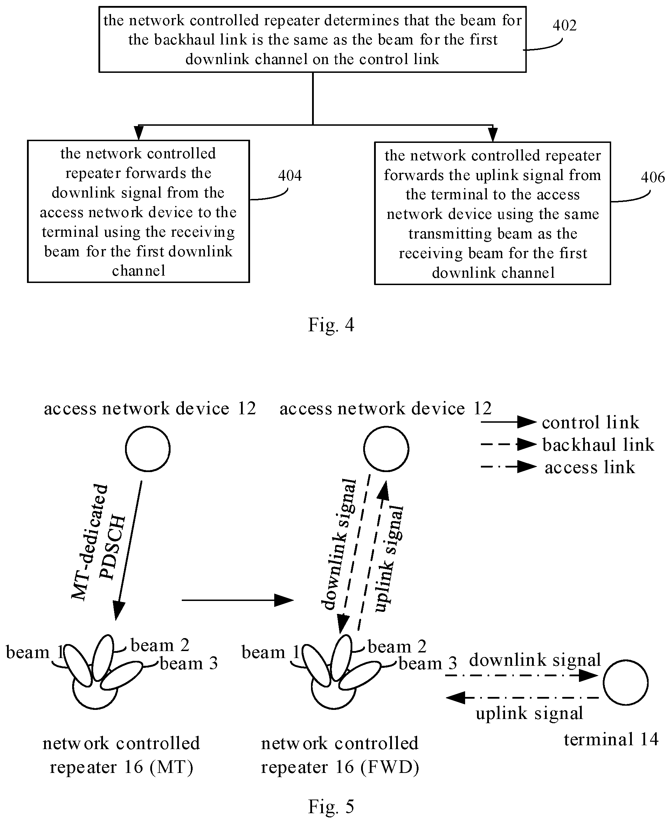

Fig. 4 shows a flowchart of a beam determination method for a backhaul link provided by an example embodiment of the present disclosure. The method is performed by a network controlled repeater, and the method includes steps 402, 404, and 406.

In step 402: the network controlled repeater determines that the beam for the backhaul link is the same as the beam for the first downlink channel on the control link.

In some embodiments, the network controlled repeater determines that the receiving beam for the backhaul link is the same as the receiving beam for the first downlink channel on the control link.

In some embodiments, the network controlled repeater determines that the transmitting beam for the backhaul link is the same as the receiving beam for the first downlink channel on the control link.

In some embodiments, the first downlink channel may be a PDCCH or a PDSCH. For example, the beam for the first downlink channel is the beam for the most recent PDCCH and/or PDSCH (the beam indicated by the TCI state to which the most recent PDSCH and/or PDCCH has been applied).

In the case where the first downlink channel is a PDCCH, the beam for the PDCCH is determined by the CORESET that carries the PDCCH. It can be understood that when the beam for the PDCCH is mentioned in the present application, it can be regarded as the beam for the CORESET. Thus, the method can also be understood as determining that the beam for the backhaul link is the same as the beam for the first CORESET on the control link. The network controlled repeater determines that the beam for the backhaul link is the same as the beam for the PDCCH on the control link. The first CORESET carrying PDCCH includes at least one of the following:
- CORESET with an index of 0, that is, CORESET#0;
- CORESET carrying SCI.

The CORESET carrying SCI includes the CORESET carrying the most recent SCI.

In the case where the first downlink channel is PDSCH, PDSCH refers to NCR/repeater/MT-dedicated PDSCH. The network controlled repeater determines that the beam for the backhaul link is the same as the beam for the PDSCH on the control link.

In step 404: the network controlled repeater forwards the downlink signal from the access network device to the terminal using the receiving beam for the first downlink channel.

In some embodiments, the access network device sends a downlink signal to the NCR via the backhaul link, and the NCR forwards the downlink signal to the terminal via the access link.

When the first downlink channel is PDCCH, NCR determines that the downlink receiving beam on the backhaul link is the same as the receiving beam used for PDCCH reception on the control link. In other words, NCR uses the receiving beam for the first CORESET to receive the downlink signal.

When the first downlink channel is PDSCH, NCR determines that the downlink receiving beam on the backhaul link is the same as the receiving beam used for PDSCH reception on the control link.

In step 406: the network controlled repeater forwards the uplink signal from the terminal to the access network device using the same transmitting beam as the receiving beam for the first downlink channel.

In some embodiments, the terminal sends an uplink signal to NCR via the access link, and NCR forwards the uplink signal to the access network device on the backhaul link.

When the first downlink channel is PDCCH, the terminal sends an uplink signal to NCR through the access link, and NCR forwards the uplink signal to the access network device on the backhaul link; or NCR uses the receiving beam for the first CORESET to send the uplink signal.

When the first downlink channel is PDSCH, the terminal sends an uplink signal to NCR through the access link, and NCR forwards the uplink signal to the access network device on the backhaul link.

It should be noted that the execution order of the above steps 404 and 406 is not limited.

As shown in Fig. 5, in the control link, the access network device 12 sends the beam configuration information and/or indication information of the MT-dedicated PDSCH to the network controlled repeater 16. Assume that the network controlled repeater 16 is configured/indicated such that beam #2 corresponding to TCI-ID#2 is used as the receiving beam to receive the MT-dedicated PDSCH on the control link. That is, the MT-dedicated PDSCH on the control link corresponds to beam 2.

The network controlled repeater 16 uses beam 2 in the backhaul link to receive the downlink signal from the access network device 12, and then forwards the downlink signal to the terminal 14 through the access link; and/or, the network controlled repeater 16 uses beam 2 in the backhaul link to forward the uplink signal to the access network device 12.

For example, in the control link, the access network device 12 sends the beam configuration information of CORESET#0 to the network controlled repeater 16, and the beam configuration information is represented by TCI-ID#2 corresponding to beam#2. Thus, the network controlled repeater uses beam 2 as a receiving beam to receive CORESET#0 on the control link.

The network controlled repeater 16 uses beam 2 in the backhaul link to receive the downlink signal from the access network device 12, and then forwards the downlink signal to the terminal 14 through the access link; and/or, the network controlled repeater 16 uses beam 2 in the backhaul link to forward the uplink signal to the access network device 12.

In summary, according to the method provided by an embodiment of the present disclosure, the receiving beam and the transmitting beam used by the network controlled repeater are the same beam, both of which are the beam for the first downlink channel.

### Regarding an embodiment in which the first channel includes a first downlink channel and a first uplink channel

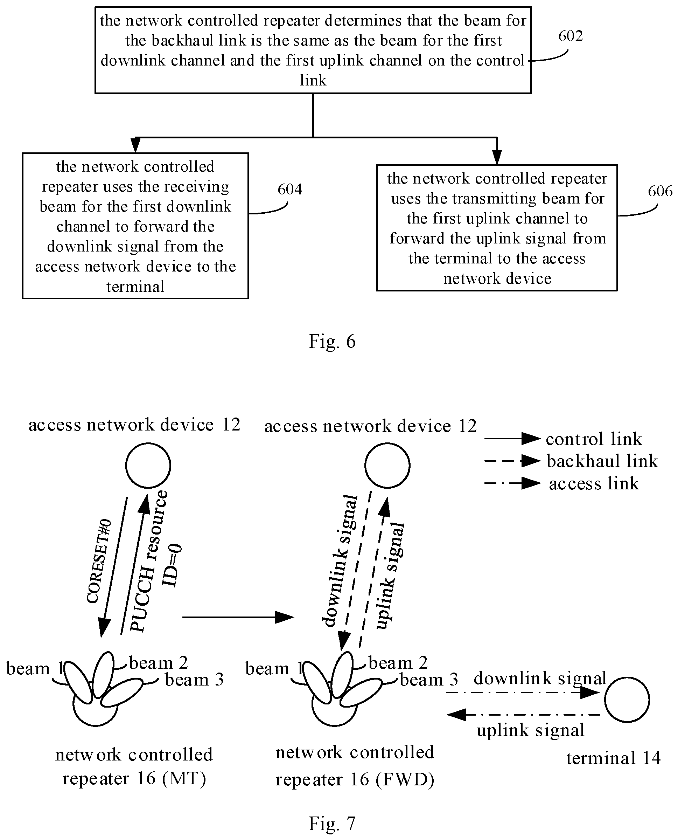

Fig. 6 shows a flowchart of a beam determination method for a backhaul link provided by an example embodiment of the present disclosure. The method is performed by a network controlled repeater, and the method includes steps 602, 604, and 606.

In step 602: the network controlled repeater determines that the beam for the backhaul link is the same as the beam for the first downlink channel and the first uplink channel on the control link.

In some embodiments, the network controlled repeater determines that the receiving beam for the backhaul link is the same as the receiving beam for the first downlink channel on the control link.

In some embodiments, the network controlled repeater determines that the transmitting beam for the backhaul link is the same as the transmitting beam for the first uplink channel on the control link.

In some embodiments, the first downlink channel may be a PDCCH or a PDSCH. For example, the beam for the first downlink channel is the beam used for the most recent reception of PDCCH and/or PDSCH on the control link (the beam indicated by the applied TCI state of the most recent PDCCH and/or PDSCH).

The downlink receiving beam for the backhaul link is the same as the receiving beam for the first downlink channel.

In some embodiments, the first uplink channel may be a PUCCH or a PUSCH. For example, the beam for the first uplink channel is the beam used for the most recent transmission of PUCCH and/or PUSCH on the control link (the beam indicated by the applied TCI state of the most recent PUCCH and/or PUSCH).

The uplink transmitting beam for the backhaul link is the same as the transmitting beam for the first uplink channel.

In step 604: the network controlled repeater uses the receiving beam for the first downlink channel to forward the downlink signal from the access network device to the terminal.

In some embodiments, the access network device sends a downlink signal to NCR via the backhaul link, and NCR forwards the downlink signal to the terminal via the access link.

In the case where the first downlink channel is PDCCH, NCR determines that the downlink receiving beam on the backhaul link is the same as the receiving beam used for PDCCH reception on the control link.

In the case where the first downlink channel is PDSCH, NCR determines that the downlink receiving beam on the backhaul link is the same as the receiving beam used for PDSCH reception on the control link.

In step 606: the network controlled repeater uses the transmitting beam for the first uplink channel to forward the uplink signal from the terminal to the access network device.

In some embodiments, the terminal sends the uplink signal to NCR via the access link, and NCR forwards the uplink signal to the access network device on the backhaul link.

When the first uplink channel is PUCCH, the terminal sends the uplink signal to NCR via the access link, and NCR forwards the uplink signal to the access network device on the backhaul link.

It should be noted that the execution order of the above steps 604 and 606 is not limited.

As shown in Fig. 7, in the control link, the access network device 12 sends the beam configuration information of CORESET#0 and the beam configuration information of PUCCH resource ID=0 to the network controlled repeater 16, where the beam configuration information of CORESET#0 is represented by TCI-ID#2 corresponding to beam#2, and the beam configuration information of PUCCH resource ID=0 is represented by SRS resource indicator (SRI)-ID#3 corresponding to beam#3. Thus, the network controlled repeater uses beam 2 as a receiving beam to receive CORESET#0 on the control link, and uses beam 3 as a transmitting beam to send PUCCH resource ID=0 on the control link.

The network controlled repeater 16 uses beam 2 in the backhaul link to receive the downlink signal from the access network device 12, and then forwards the downlink signal to the terminal 14 through the access link; and/or, the network controlled repeater 16 uses beam 3 in the backhaul link to forward the uplink signal to the access network device 12.

In summary, according to the method provided by an embodiment of the present disclosure, the receiving beam and the transmitting beam used by the network controlled repeater are different beams, which are the receiving beam for the first downlink channel and the transmitting beam for the first uplink channel, respectively. Therefore, in the case of non-reciprocal channels, both the downlink channel and the uplink channel can obtain better working effects.

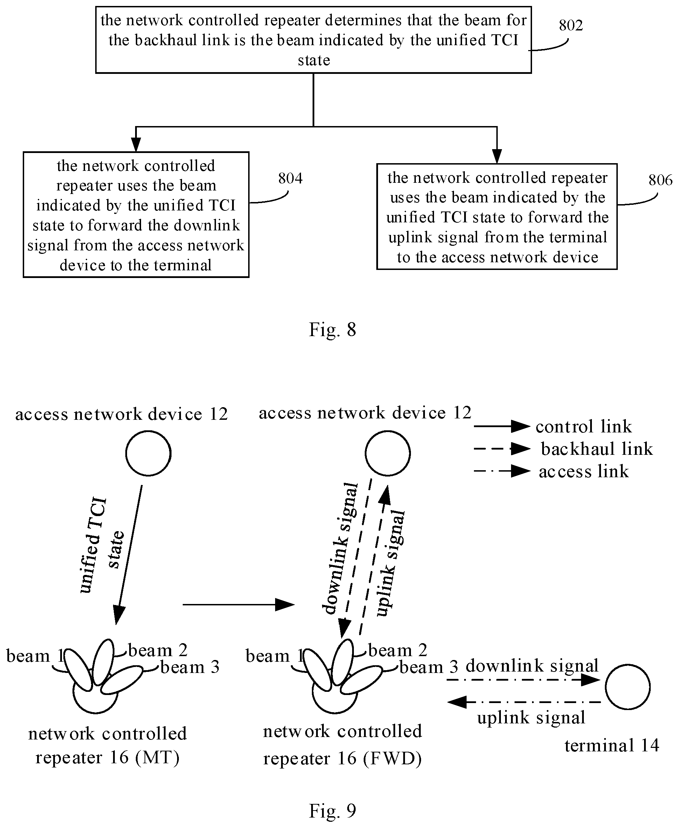

Fig. 8 shows a flowchart of a beam determination method for a backhaul link provided by an example embodiment of the present disclosure. The method is performed by a network controlled repeater, and the method includes steps 802, 804, and 806.

The beam for the first channel is indicated by a unified TCI state.

In step 802: the network controlled repeater determines that the beam for the backhaul link is the beam indicated by the unified TCI state.

In some embodiments, the unified TCI state includes at least one of the following:
- Joint TCI state (DL or Joint TCI state);
- Downlink separate TCI state (DL or Joint TCI state);
- Uplink separate TCI state (UL TCI state).

In some embodiments, the unified TCI state includes a joint TCI state, and the network controlled repeater determines that the receiving beam for the backhaul link is the same as the beam indicated by the joint TCI state. For example, the network controlled repeater determines that the receiving beam for the backhaul link is the same as the beam indicated by the joint TCI state that was most recently applied on the control link.

In some embodiments, the unified TCI state includes a joint TCI state, and the network controlled repeater determines that the transmitting beam for the backhaul link is the same as the beam indicated by the joint TCI state. For example, the network controlled repeater determines that the transmitting beam for the backhaul link is the same as the beam indicated by the joint TCI state that was most recently applied on the control link.

In some embodiments, the unified TCI state includes a downlink separate TCI state and an uplink separate TCI state, and the network controlled repeater determines that the receiving beam for the backhaul link is the same as the beam indicated by the downlink separate TCI state. For example, the network controlled repeater determines that the receiving beam for the backhaul link is the same as the beam indicated by the downlink separate TCI state that was most recently applied on the control link.

In some embodiments, the unified TCI state includes a downlink separate TCI state and an uplink separate TCI state, and the network controlled repeater determines that the transmitting beam for the backhaul link is the same as the beam indicated by the uplink separate TCI state. For example, the network controlled repeater determines that the transmitting beam for the backhaul link is the same as the beam indicated by the uplink separate TCI state that was most recently applied on the control link.

In step 804: the network controlled repeater uses the beam indicated by the unified TCI state to forward the downlink signal from the access network device to the terminal.

In some embodiments, the access network device sends a downlink signal to NCR via the backhaul link, and NCR forwards the downlink signal to the terminal via the access link.

In step 806: the network controlled repeater uses the beam indicated by the unified TCI state to forward the uplink signal from the terminal to the access network device.

In some embodiments, the terminal sends an uplink signal to NCR via the access link, and NCR forwards the uplink signal to the access network device on the backhaul link.

It should be noted that the execution order of the above steps 804 and 806 is not limited.

As shown in Fig. 9, in the control link, the access network device 12 sends the configuration and/or indication information of the unified TCI state to the network controlled repeater 16, and the unified TCI state is used to indicate beam 2. That is, the unified TCI state on the control link corresponds to beam 2.

The network controlled repeater 16 uses beam 2 in the backhaul link to receive the downlink signal from the access network device 12, and then forwards the downlink signal to the terminal 14 through the access link; and/or, the network controlled repeater 16 uses beam 2 in the backhaul link to forward the uplink signal to the access network device 12.

In summary, the method provided by an embodiment of the present disclosure can determine that the beam on the backhaul link is the same as the beam indicated by the unified TCI state on the control link when there are multiple candidate beams on the control link, thereby accurately determining the transmitting beam and/or the receiving beam used on the backhaul link.

### Regarding an embodiment in which the unified TCI state includes a joint TCI state

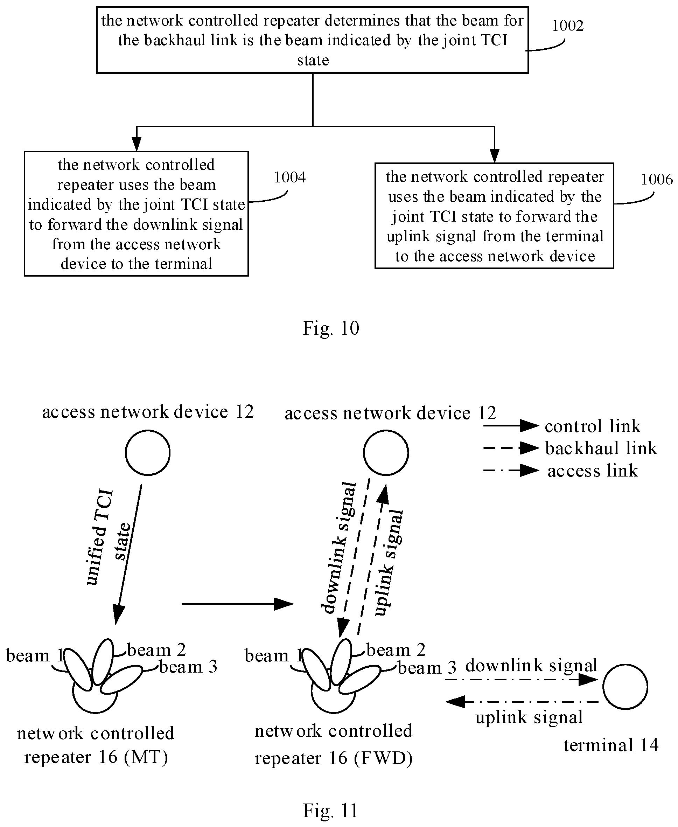

Fig. 10 shows a flowchart of a beam determination method for a backhaul link provided by an example embodiment of the present disclosure. The method is performed by a network controlled repeater, and the method includes steps 1002, 1004, and 1006.

In step 1002: the network controlled repeater determines that the beam for the backhaul link is the beam indicated by the joint TCI state.

In some embodiments, the network controlled repeater determines that the receiving beam for the backhaul link is the same as the beam indicated by the joint TCI state. For example, the network controlled repeater determines that the receiving beam for the backhaul link is the same as the beam indicated by the joint TCI state which was most recently applied on the control link.

In some embodiments, the network controlled repeater determines that the transmitting beam for the backhaul link is the same as the beam indicated by the joint TCI state. For example, the network controlled repeater determines that the transmitting beam for the backhaul link is the same as the beam indicated by the joint TCI state which was most recently applied on the control link.

In some embodiments, the access network device first uses Radio Resource Control (RRC) to configure the list "DLorJoint-TCI State" to the network controlled repeater, and the list "DLorJoint-TCI State" includes multiple TCI states. Then, the access network device uses MAC CE and/or DCI to indicate a joint TCI state to the network controlled repeater, and the joint TCI state is one of the multiple TCI states corresponding to the list "DLorJoint-TCI State".

In step 1004: the network controlled repeater uses the beam indicated by the joint TCI state to forward the downlink signal from the access network device to the terminal.

In some embodiments, the access network device sends a downlink signal to NCR through the backhaul link, and NCR forwards the downlink signal to the terminal through the access link.

In step 1006: the network controlled repeater uses the beam indicated by the joint TCI state to forward the uplink signal from the terminal to the access network device.

In some embodiments, the terminal sends an uplink signal to NCR via the access link, and NCR forwards the uplink signal to the access network device on the backhaul link.

It should be noted that the execution order of the above steps 1004 and 1006 is not limited.

As shown in Fig. 11, in the control link, the access network device 12 sends the configuration and/or indication information of the joint TCI state to the network controlled repeater 16, and the joint TCI state is used to indicate beam 2. That is, the joint TCI state on the control link corresponds to beam 2.

The network controlled repeater 16 uses beam 2 in the backhaul link to receive the downlink signal from the access network device 12, and then forwards the downlink signal to the terminal 14 through the access link; and/or, the network controlled repeater 16 uses beam 2 in the backhaul link to forward the uplink signal to the access network device 12.

In summary, according to the method provided by an embodiment of the present disclosure, the receiving beam and the transmitting beam used by the network controlled repeater are the same beam, both of which are the beam indicated by the joint TCI state. Thus, the implementation complexity of the solution can be reduced.

### Regarding an embodiment in which the unified TCI state includes a downlink separate TCI state and an uplink separate TCI state

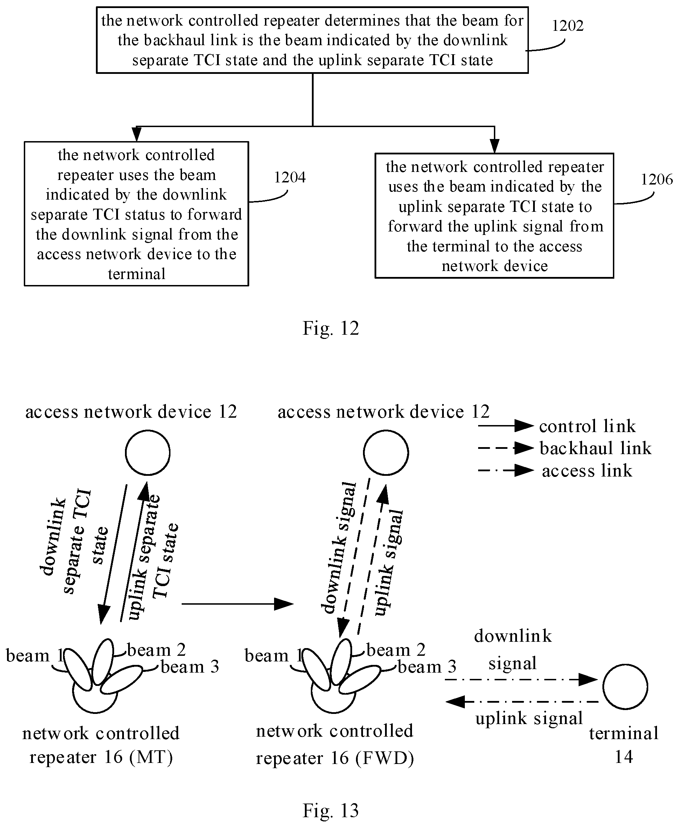

Fig. 12 shows a flowchart of a beam determination method for a backhaul link provided by an example embodiment of the present disclosure. The method is performed by a network controlled repeater, and the method includes steps 1202, 1204, and 1206.

The beam for the first channel is indicated by a unified TCI state, and the unified TCI state includes a downlink separate TCI state and an uplink separate TCI state.

In step 1202: the network controlled repeater determines that the beam for the backhaul link is the beam indicated by the downlink separate TCI state and the uplink separate TCI state.

In some embodiments, the network controlled repeater determines that the receiving beam for the backhaul link is the same as the beam indicated by the downlink separate TCI state. For example, the network controlled repeater determines that the receiving beam for the backhaul link is the same as the beam indicated by the downlink separate TCI state that was most recently applied on the control link.

In some embodiments, the network controlled repeater determines that the transmitting beam for the backhaul link is the same as the beam indicated by the uplink separate TCI state. For example, the network controlled repeater determines that the transmitting beam for the backhaul link is the same as the beam indicated by the uplink separate TCI status that was most recently applied on the control link.

In step 1204: the network controlled repeater uses the beam indicated by the downlink separate TCI status to forward the downlink signal from the access network device to the terminal.

In some embodiments, the access network device sends a downlink signal to NCR via the backhaul link, and NCR forwards the downlink signal to the terminal via the access link.

In step 1206: the network controlled repeater uses the beam indicated by the uplink separate TCI state to forward the uplink signal from the terminal to the access network device.

In some embodiments, the terminal sends an uplink signal to NCR via the access link, and NCR forwards the uplink signal to the access network device on the backhaul link.

In some embodiments, the access network device first uses RRC to configure the list "DLorJoint-TCI State" to the network controlled repeater, and the list "DLorJoint-TCI State" includes multiple TCI states. Then, the access network device uses MAC CE and/or DCI to indicate a downlink separate TCI state to the network controlled repeater, and the downlink separate TCI state is one of the multiple TCI states corresponding to the list "DLorJoint-TCI State".

In some embodiments, the access network device first uses RRC to configure the list "UL TCI state" to the network controlled repeater, and the list "UL TCI state" includes multiple TCI states. Then, the access network device uses MAC CE and/or DCI to indicate an uplink separate TCI state to the network controlled repeater, and the uplink separate TCI state is one of the multiple TCI states corresponding to the list "UL TCI state".

It should be noted that the execution order of the above steps 1204 and 1206 is not limited.

As shown in Fig. 13, in the control link, the access network device 12 sends the configuration and/or indication information of the downlink separate TCI state to the network controlled repeater 16, and receives the configuration and/or indication information of the uplink separate TCI state. The downlink separate TCI state on the control link corresponds to beam 2, and the uplink separate TCI state corresponds to beam 3.

The network controlled repeater 16 uses beam 2 in the backhaul link to receive the downlink signal from the access network device 12, and then forwards the downlink signal to the terminal 14 through the access link; and/or, the network controlled repeater 16 uses beam 3 in the backhaul link to forward the uplink signal to the access network device 12.

In summary, according to the method provided by an embodiment of the present disclosure, the receiving beam and the transmitting beam used by the network controlled repeater are different beams, which are the receiving beam for the downlink separate TCI state indicator and the transmitting beam for the uplink separate TCI state indicator, respectively. Therefore, in the case where the channels are not reciprocal, both the downlink channel and the uplink channel can obtain better working effects.

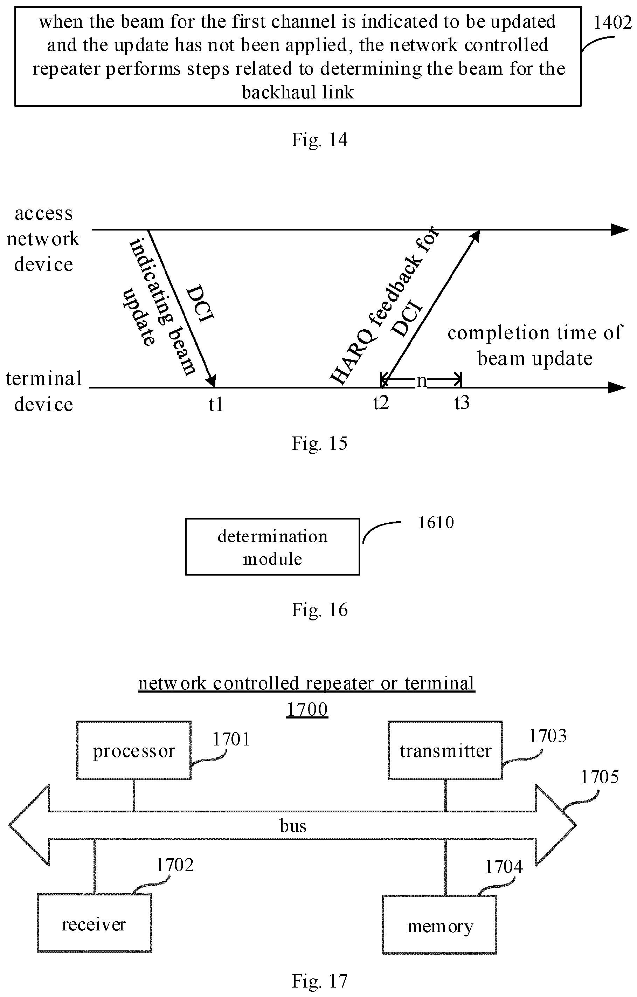

Fig. 14 shows a flowchart of a beam determination method for a backhaul link provided by an example embodiment of the present disclosure. The method is performed by a network controlled repeater, and the method includes step 1402.

In step 1402: when the beam for the first channel is indicated to be updated and the update has not been applied, the network controlled repeater performs steps related to determining the beam for the backhaul link.

Assume that the access network device indicates to the network controlled repeater that the beam update for the first channel is the first moment, and the completion time of the beam update for the first channel is the second moment, then the second moment is usually later than the first moment. The steps related to determining the beam for the backhaul link performed by the network controlled repeater are at least one of the following:
- determining the beam for the backhaul link as the default beam;
- keeping the beam for the backhaul link unchanged as the beam used before the above update is applied;
- determining that the beam for the backhaul link always follows the beam for the first channel.

As shown in Fig. 15, the network controlled repeater receives DCI without data scheduling at time t1, and the DCI without data scheduling is used to indicate the beam update for the first channel. The network controlled repeater applies the new beam n symbols (t3) after the last symbol (t2) of the HARQ feedback for the DCI. The specific value of n is indicated by the access network device.

In some embodiments, between the first moment (t1) and the second moment (t3), the network controlled repeater determines that the beam for the backhaul link is the default beam. The default beam is predefined, or preconfigured, or configured or specified by the access network device. For example, the access network device configures or specifies in advance through RRC signaling.

In some embodiments, between the first moment (t1) and the second moment (t3), the network controlled repeater keeps the beam for the backhaul link unchanged as the beam used before the above-mentioned update is applied. For example, even if the beam for the first channel undergoes other changes between the first moment (t1) and the second moment (t3), and becomes different from the beam used before the above-mentioned update is applied, the network controlled repeater still keeps the beam for the backhaul link unchanged as the beam used before the above-mentioned update is applied.

In some embodiments, between the first moment (t1) and the second moment (t3), the network controlled repeater determines that the beam for the backhaul link always follows the beam for the first channel. For example, even if the beam for the first channel undergoes other changes between the first moment (t1) and the second moment (t3), and becomes different from the beam used before the above-mentioned update is applied, the network controlled repeater determines that the beam for the backhaul link always follows the beam for the first channel.

Fig. 16 shows a block diagram of a beam determination apparatus for a backhaul link provided by an example embodiment of the present disclosure, the apparatus including:
a determination module 1610, configured to determine that the beam for the backhaul link is the same as the beam for the first channel on the control link.

In an implementation according to an embodiment of the present disclosure, the first channel includes at least one of the following:
Physical Downlink Control Channel PDCCH, where the PDCCH includes the most recent PDCCH;
Physical Downlink Shared Channel PDSCH, where the PDSCH includes the most recent PDSCH;
Physical Uplink Control Channel PUCCH, where the PUCCH includes the most recent PUCCH;
Physical Uplink Shared Channel PUSCH, where the PUSCH includes the most recent PUSCH.

In an implementation according to an embodiment of the present disclosure, the beam for the PDCCH is determined by the CORESET carrying the PDCCH, and the CORESET carrying the PDCCH includes at least one of the following:
CORESET with an index of 0;
CORESET carrying SCI.

In an implementation according to an embodiment of the present disclosure, the CORESET carrying SCI includes the CORESET carrying the most recent SCI.

In an implementation according to an embodiment of the present disclosure, the first channel includes a first downlink channel.

The apparatus further includes a first receiving module and a first transmitting module.

The first receiving module is configured to determine that the receiving beam for the backhaul link is the same as the receiving beam for the first downlink channel on the control link. In some embodiments, the beam for the first downlink channel is the beam for the most recent PDCCH and/or PDSCH (the beam indicated by the TCI state that is applied by the most recent PDSCH and/or PDCCH).

The first transmitting module is configured to determine that the transmitting beam for the backhaul link is the same as the receiving beam for the first downlink channel on the control link. In some embodiments, the beam for the first downlink channel is the beam for the most recent PDCCH and/or PDSCH (the beam indicated by the TCI state that is applied by the most recent PDSCH and/or PDCCH).

In an implementation according to an embodiment of the present disclosure, the first channel includes a first downlink channel and a first uplink channel.

The apparatus further includes a second receiving module and a second transmitting module.

The second receiving module is configured to determine that the receiving beam for the backhaul link is the same as the receiving beam for the first downlink channel on the control link. In some embodiments, the beam for the first downlink channel is the beam used for the most recent reception of PDCCH and/or PDSCH on the control link (the beam indicated by the applied TCI state of the most recent PDCCH and/or PDSCH).

The second transmitting module is configured to determine that the transmitting beam for the backhaul link is the same as the transmitting beam for the first uplink channel on the control link. In some embodiments, the beam for the first uplink channel is the beam used for the most recent transmission of PUCCH and/or PUSCH on the control link (the beam indicated by the applied TCI state of the most recent PUCCH and/or PUSCH).

In an implementation according to an embodiment of the present disclosure, the beam for the first channel is indicated by the TCI state.

The determining that the beam for the backhaul link is the same as the beam for the first channel on the control link includes:
determining that the beam for the backhaul link is the beam indicated by the unified TCI state.

In an implementation according to an embodiment of the present disclosure, the unified TCI state is the joint TCI state.

The apparatus further includes a third receiving module and a third transmitting module.

The third receiving module is configured to determine that the receiving beam for the backhaul link is the same as the beam indicated by the joint TCI state. In some embodiments, it is determined that the receiving beam for the backhaul link is the same as the beam indicated by the joint TCI state that was most recently applied on the control link.

The third transmitting module is configured to determine that the transmitting beam for the backhaul link is the same as the beam indicated by the joint TCI state. In some embodiments, it is determined that the transmitting beam for the backhaul link is the same as the beam indicated by the joint TCI state that was most recently applied on the control link.

In an implementation according to an embodiment of the present disclosure, the unified TCI state includes a downlink separate TCI state and an uplink separate TCI state.

The apparatus further includes a fourth receiving module and a fourth transmitting module.

The fourth receiving module is configured to determine that the receiving beam for the backhaul link is the same as the beam indicated by the downlink separate TCI state. In some embodiments, it is determined that the receiving beam for the backhaul link is the same as the beam indicated by the downlink separate TCI state that was most recently applied on the control link.

The fourth transmitting module is configured to determine that the transmitting beam for the backhaul link is the same as the beam indicated by the uplink separate TCI state. In some embodiments, it is determined that the transmitting beam for the backhaul link is the same as the beam indicated by the uplink separate TCI state that was most recently applied on the control link.

In an implementation according to an embodiment of the present disclosure, the apparatus further includes a fifth determination module, or a fifth keeping module, or a sixth determination module.

The fifth determination module is configured to determine that the beam for the backhaul link is the default beam when the beam for the first channel is indicated to be updated and the update has not been applied.

The fifth keeping module is configured to keep the beam for the backhaul link unchanged as the beam used before the update is applied when the beam for the first channel is indicated to be updated and the update has not been applied.

The sixth determination module is configured to determine that the beam for the backhaul link always follows the beam for the first channel when the beam for the first channel is indicated to be updated and the update has not been applied.

In an implementation according to an embodiment of the present disclosure, the default beam is configured by the access network device.

In an implementation according to an embodiment of the present disclosure, the completion time of the beam update for the backhaul link and the completion time of the beam on the control link are the same.

Fig. 17 shows a schematic structural diagram of a network controlled repeater or terminal 1700 provided by an example embodiment of the present disclosure. The network controlled repeater or terminal includes a processor 1701, a receiver 1702, a transmitter 1703, a memory 1704, and a bus 1705.

The processor 1701 includes one or more processing cores. The processor 1701 performs various functional applications and information processing by running software programs and modules.

The receiver 1702 and the transmitter 1703 may be implemented as a communication component, which may be a communication chip.

The memory 1704 is connected to the processor 1701 via a bus 1705.

The memory 1704 may be used to store at least one instruction. The processor 1701 is used to execute the at least one instruction to implement each step in the above method embodiment(s).

In addition, the memory 1704 may be implemented by any type of volatile or non-volatile storage device or a combination thereof. The volatile or non-volatile storage device includes, but is not limited to, a magnetic disk or optical disk, an Electrically Erasable Programmable Read-Only Memory (EEPROM), an Erasable Programmable Read-Only Memory (EPROM), a Static Random-Access Memory (SRAM), a Read-Only Memory (ROM), a magnetic memory, a flash memory, and a Programmable Read-Only Memory (PROM).

In an example embodiment, a non-transistory computer-readable storage medium including instructions is further provided, such as a memory including instructions. The instructions may be executed by a processor of a terminal to complete the above-mentioned beam determination method for the backhaul link. For example, the non-transistory computer-readable storage medium may be a ROM, a Random-Access Memory (RAM), a Compact Disc Read-Only Memory (CD-ROM), a magnetic tape, a floppy disk, and an optical data storage device, etc.

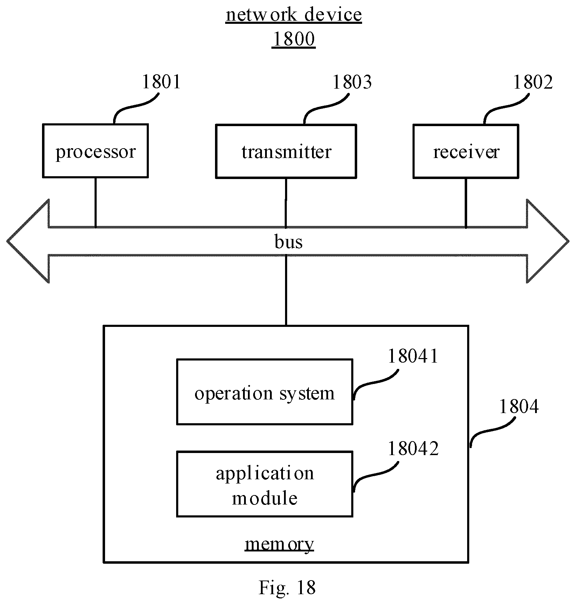

Fig. 18 is a block diagram of an access network device 1800 according to an example embodiment. The access network device 1800 may be a base station.

The access network device 1800 may include a processor 1801, a receiver 1802, a transmitter 1803, and a memory 1804. The receiver 1802, the transmitter 1803, and the memory 1804 are respectively connected to the processor 1801 through a bus.

The processor 1801 includes one or more processing cores. The processor 1801 performs the beam determination method for the backhaul link provided by an embodiment of the present disclosure by running software programs and modules. The memory 1804 may be used to store software programs and modules. Specifically, the memory 1804 may store an operation system 18041 and an application module 18042 required for at least one function. The receiver 1802 is used to receive communication data sent by other devices. The transmitter 1803 is used to send communication data to other devices.

An example embodiment of the present disclosure further provides a computer-readable storage medium, in which at least one instruction, at least one program, a code set, or an instruction set is stored. The at least one instruction, the at least one program, the code set, or the instruction set is loaded and executed by a processor to implement the beam determination method for the backhaul link provided by the above-mentioned various method embodiments.

An example embodiment of the present disclosure further provides a computer program product, which includes computer instructions. The computer instructions are stored in a computer-readable storage medium. The processor of the computer device reads the computer instructions from the computer-readable storage medium, and the processor executes the computer instructions, so that the computer device performs the beam determination method for the backhaul link provided by the above-mentioned various method embodiments.

It should be understood that the "multiple" as mentioned in the present application refers to two or more. After considering the specification and practicing the content disclosed herein, those skilled in the art shall easily think of other embodiments of the present disclosure. The present disclosure is intended to cover any variation, use, or adaptive change of the present disclosure, which follows the general principles of the present disclosure and includes common knowledge or conventional technical means in the technical field not disclosed in the present disclosure. The specification and embodiments are only regarded as examples, and the true scope and spirit of the present disclosure are indicated by the following claims.

It should be understood that the present disclosure is not limited to the precise structures that have been described above and shown in the drawings, and that various modifications and changes may be made without departing from the scope thereof. The scope of the present disclosure is limited only by the appended claims.

## Claims

1. A beam determination method for a backhaul link, performed by a network controlled repeater, and comprising:
determining that a beam for the backhaul link is the same as a beam for a first channel on a control link.

2. The method according to claim 1, wherein the first channel comprises at least one of:
a Physical Downlink Control Channel (PDCCH);
a Physical Downlink Shared Channel (PDSCH);
a Physical Uplink Control Channel (PUCCH); or
a Physical Uplink Shared Channel (PUSCH).

3. The method according to claim 2, wherein the beam for the PDCCH is determined by a Control Resource Set (CORESET) carrying the PDCCH, and the CORESET carrying the PDCCH comprises at least one of:
a CORESET with an index of 0; or
a CORESET carrying Side Control Information (SCI).

4. The method according to claim 3, wherein the CORESET carrying the Side Control Information (SCI) comprises:
a CORESET carrying the most recent SCI.

5. The method according to any one of claims 1 to 4, wherein
the first channel comprises a first downlink channel; and
the determining that the beam for the backhaul link is the same as the beam for the first channel on the control link comprises:
determining that a receiving beam for the backhaul link is the same as a receiving beam for the first downlink channel on the control link; and
determining that a transmitting beam for the backhaul link is the same as the receiving beam for the first downlink channel on the control link.

6. The method according to any one of claims 1 to 4, wherein
the first channel comprises a first downlink channel and a first uplink channel; and
the determining that the beam for the backhaul link is the same as the beam for the first channel on the control link comprises:
determining that a receiving beam for the backhaul link is the same as a receiving beam for the first downlink channel on the control link; and
determining that a transmitting beam for the backhaul link is the same as a transmitting beam for the first uplink channel on the control link.

7. The method according to any one of claims 1 to 4, wherein
the beam for the first channel is indicated by a unified Transmission Configuration Indicator (TCI) state; and
the determining that the beam for the backhaul link is the same as the beam for the first channel on the control link comprises:
determining that the beam for the backhaul link is a beam indicated by the unified TCI state.

8. The method according to claim 7, wherein
the unified TCI state is a joint TCI state; and
the determining that the beam for the backhaul link is the same as the beam for the first channel on the control link comprises:
determining that a receiving beam for the backhaul link is the same as a beam indicated by the joint TCI state; and
determining that a transmitting beam for the backhaul link is the same as a beam indicated by the joint TCI state.

9. The method according to claim 7, wherein
the unified TCI state comprises a downlink separate TCI state and an uplink separate TCI state; and
the determining that the beam for the backhaul link is the same as the beam for the first channel on the control link comprises:
determining that a receiving beam for the backhaul link is the same as a beam indicated by the downlink separate TCI state; and
determining that a transmitting beam for the backhaul link is the same as a beam indicated by the uplink separate TCI state.

10. The method according to any one of claims 1 to 9, further comprising:
in a case that the beam for the first channel is indicated to be updated and the update has not been applied, determining that the beam for the backhaul link is a default beam; or
in a case that the beam for the first channel is indicated to be updated and the update has not been applied, keeping the beam for the backhaul link unchanged as a beam used before the update is applied; or
in a case that the beam for the first channel is indicated to be updated and the update has not been applied, determining that the beam for the backhaul link always follows the beam for the first channel.

11. The method according to claim 10, wherein the default beam is configured by an access network device.

12. The method according to claim 10, wherein a completion time of a beam update for the backhaul link and a completion time for a beam on the control link are the same.

13. A beam determination apparatus for a backhaul link, comprising:
a determination module, configured to determine that a beam for the backhaul link is the same as a beam for a first channel on a control link.

14. A network controlled repeater, comprising:
a processor; and
a transceiver connected to the processor, wherein
the processor is configured to load and execute executable instructions to implement the beam determination method for the backhaul link according to any one of claims 1 to 12.

15. A terminal, comprising:
a processor; and
a transceiver connected to the processor, wherein
the processor is configured to load and execute executable instructions to implement the beam determination method for the backhaul link according to any one of claims 1 to 12.

16. A chip, comprising at least one of a programmable logic circuit or a program instruction, wherein when the chip is running, the beam determination method for the backhaul link according to any one of claims 1 to 12 is implemented.

17. A computer-readable storage medium, having at least one instruction, at least one program, a code set, or an instruction set stored therein, wherein the at least one instruction, the at least one program, the code set, or the instruction set is loaded and executed by a processor to implement the beam determination method for the backhaul link according to any one of claims 1 to 12.

18. A computer program product, comprising a computer instruction, wherein the computer instruction is stored in a computer-readable storage medium, a processor of a computer device reads the computer instruction from the computer-readable storage medium, and the processor executes the computer instruction, so that the computer device performs the beam determination method for the backhaul link according to any one of claims 1 to 12.
